# EUROPEAN PATENT APPLICATION

(11) **EP 0 885 554 A2**
(43) Date of publication of application: **23.12.1998**
(21) Application number: 98102237.9
(22) Date of filing: 09.02.1998
(51) Int. Cl.: A01C 1/06

(54) **Paper/seed-unified planting seed unit and preparation process thereof**

(30) Priority: 17.06.1997 JP 160060/97
(71) Applicant: Fukuoka, Masanobu, Iyo-shi, Ehime-ken (JP)
(72) Inventor: Fukuoka, Masanobu, Iyo-shi, Ehime-ken (JP)
(74) Representative: Grünecker, Kinkeldey, Stockmair & Schwanhäusser Anwaltssozietät

(57) **Abstract**

Disclosed is a planting seed unit having a vegetable seed and a mass of paper which is unified with the vegetable seed to cover the vegetable seed. This planting seed unit is prepared by crushing paper in the presence of water to obtain an aqueous liquid paper; mixing a vegetable seed with the aqueous liquid paper; molding the mixture in a predetermined shape; and drying the molded mixture. Another planting seed unit has a mass of clay which contains a vegetable seed; and a coating layer comprising paper covering the mass of clay. This unit is prepared by coating a mass of clay containing a vegetable seed with the aqueous liquid paper; and drying it.

## Description

### BACKGROUND OF THE INVENTION

### Field of the Invention

The present invention relates to a planting seed unit which is useful for planting uncultivated land with vegetable seeds and a preparation process thereof, and particularly to a planting seed unit in which the vegetable seed and finely crushed paper are unified and a preparation process thereof.

### Description of the Prior Art

There is a known planting seed unit in a form of a clay ball in which vegetable seed and clay are mixed and formed in a ball shape according to an earlier invention accomplished by the inventor of present application. It makes possible direct sowing of rice, wheat and vegetables without plowing the ground and has been widely put into effect.

In the case of dissemination by an aircraft, however, the clay ball-form planting seed unit described above is not strong enough, because the clay ball is damaged due to destruction due to freezing on the way to the ground, impact at the touchdown, freezing destruction on the ground, crack due to drying, destruction due to heavy rain or the like.

In order to improve the above clay ball-form seed unit and increase adaptability to a wide range of planting, another type of a clay-ball planting unit has been proposed by the inventor of the present application. This clay ball-form seed unit has a multi-layer structure and comprises a vegetable seed layer, a burned clay powder layer, and a bittern/slaked lime/clay powder layer.

However, since clay and minerals having a large weight are used in the clay ball-form planting unit, it is disadvantageous to the transport, handling or the like, depending upon the place where it is used or the manner it is used.

### SUMMARY OF THE INVENTION

It is therefore an object of the present invention to provide a light planting seed unit which has the same performance as that of the conventional clay ball-form seed unit and the preparation process thereof.

The foregoing object is accomplished in the present invention by providing a planting seed unit comprising a vegetable seed and a mass of paper which is unified with the vegetable seed to cover the vegetable seed.

The above planting seed unit can further comprises a vegetable cell or bacteria which is contained in the mass of paper, and the bacteria may include mushroom.

The above planting seed unit can further comprises clay in the mass of paper.

In the above planting seed unit, the paper may include biodegradable paper.

In the above planting seed unit, the paper may include wood pulp.

The planting seed unit of claim 1, having a shape which is selected from the group consisting of spherical form, pellet form, tablet form and mat form.

According to the present invention provided is another planting seed unit comprising: a mass of clay which contains a vegetable seed; and a coating layer comprising paper and covering the mass of clay.

Moreover, a process for preparing a planting seed unit provided according to the present invention, comprises the steps of: finely crushing paper in the presence of water to obtain an aqueous liquid paper; mixing a vegetable seed with the aqueous liquid paper to obtain a mixture; molding the mixture in a predetermined shape; and drying the molded mixture to obtain the planting seed unit.

The above preparation process may further comprises: breaking or cutting the paper, before the crushing step, into small pieces; and dehydrating the mixture, before the molding step, so as to make easy molding of the mixture, wherein, at the mixing step, 5 to 10 parts by volume of the aqueous liquid paper is mixed with one part by volume of the vegetable seed.

Moreover, another process for preparing a planting seed unit according to the present invention comprises the steps of: making a mass of clay which contains a vegetable seed; finely crushing paper in the presence of water to obtain an aqueous liquid paper; coating the mass of clay with the aqueous liquid paper; and drying the aqueous liquid paper coated on the mass of clay to obtain the planting seed unit.

### DETAILED DESCRIPTION OF THE PREFERRED EMBODIMENTS

Under the background described above, the inventor made thorough investigations, and as a result, found that the object of the present invention could be attained by using a gel-form liquid prepared by finely crushing a paper in the presence of water, instead of clay used for the conventional ball-shaped seeds, and thus completed the present invention.

The planting seed unit of the present invention is obtained in a form that a vegetable seed and finely crushed paper are unified. For the paper portion of the planting seed unit, any paper may be used, but it must be easily crushed into fine pieces in the presence of water so as to make a liquid of gel-form paper with water or an aqueous liquid paper. From this reason and an economical reason, in particular, used paper such as used newspapers, used magazines and the like is suitable, and it is desirable to use biodegradable paper, particularly, a paper made of wood pulp, which will perish with lapse of time, after sowing of the planting seed unit. The number of the vegetable seed contained in the planting seed unit can be single or a plural number. In the case that a plurality of vegetable seeds are contained in one planting seed unit, they may be of the same kind or different, and the kind of the vegetable seed can be appropriately selected as occasion arises. For example, seeds of trees such as pine, cedar, cypress, beech and the like, of flowers, of fluits such as grapes, watermelon and the like, of vegetables such as corn, beans, potatos and the like, of cereals such as wheat, barley, rice, sugar cane and the like, of grasses such as clover, vetch, alfalfa and the like can be utilized. Moreover, a vegetable cell and/or bacteria (mushroom or the like) can be mixed into the planting seed unit, and clay can also be added thereto in order to adapt the vegetable seed to the sowing ground, specifically, to increase the water-retaining property in the place where the climate is fierce, such as desert.

The planting seed unit of the present invention can be prepared by: finely crushing the above-mentioned paper in the presence of water to obtain an aqueous gel-form paper liquid; mixing the vegetable seed in the gel-form paper liquid; and molding and drying the mixture. Preferably, the paper before the finely crushing step is broken or cut into small pieces. As for the manner to finely crush the paper in the water and form a gel-form liquid, for example, on a small scale, water and the above-mentioned small pieces of paper are put into a household mixer and stirred for about 15 minutes or less, ordinarily, for 1 to 3 minutes. There is no limitation for the ratio of the water to the paper to be used for making the gel-form liquid, and it can be properly determined as occasion requires.

Vegetable seeds and, according to need, the above-mentioned vegetable cell and/or bacteria and clay are thoroughly mixed in thus obtained aqueous gel-form paper liquid. The mixture is lightly dehydrated and formed into a mass of a proper shape, for example, spherical form, pellet form, tablet form, mat form and the like, depending upon the place where the planting seed unit is to be used and the method in which it is to be used. The mass of the mixture is then dried to obtain the planting seed unit of the present invention. Drying can be performed by any method, for example, using the sun light, a heater, air blow or the like. The degree to dry the mass of the mixture can be determined properly depending upon the place where the planting seed unit is used and the manner to use it. The mixing ratio of the gel-form paper liquid to the vegetable seed is optional, but normally, the gel-form paper liquid is used at a volume ratio of 5 to 10 parts relative to one part vegetable seed.

Moreover, it is also possible to use the gel-form paper liquid mentioned above for improving the clay ball-form seed unit according to Japanese Patent No. 2053201, and this can be achieved by covering the seed unit with a coating layer comprising a dried material of the gel-form paper liquid. The clay ball-form seed unit of Japanese Patent No. 2053201 comprises: an inner layer composed of vegetable seeds and bacteria attached thereon; an intermediate layer composed of burned clay powder; and a surface layer composed of bittern, slaked lime and clay powder, and if it is covered with the coating layer of the dried material of the gel-form paper liquid, the covering paper imparts a resilient property and a heat-retaining property to the clay ball-form seed unit. The coating layer may also contain the vegetable seed, the vegetable cell and/or the bacteria as mentioned above.

Furthermore, if seed of a green manure grass is mixed in the vegetable seeds, the green manure grass grows on the sown ground accompanied by manure, bacteria, etc. which are brought into the sown ground, thereby manuring and plowing are not necessary. Moreover, if the vegetable seed is a seed of a pine tree, the matsutake mushroom bacteria which are the mycorrhiza germ thereof are preferably incorporated, and if the vegetable seed is a leguminous plant seed, leguminous bacteria are preferably incorporated in the planting seed unit or the above-mentioned clay ball-form seed unit having the coating layer composed of paper, thereby these vegetables can be favorably grown.

The planting seed unit according to the present invention can be prepared quite easily even at home as described above, and thus prepared planting seed unit can be used for growing vegetables even in a family vegetable garden, a pot or the like. Since the planting seed unit of the present invention is very light, use of it makes easy to plant seeds in not only plowlands and croplands but also a place where cultivation is quite difficult such as steep slopes, devastated grounds, deserts and the like. In particular, in the dissemination by an aircraft on deserts having a wide area, the planting seed unit of the present invention can be used to push ahead the greening and food production economically and efficiently.

Since the planting seed unit of the present invention has the above-mentioned construction and the vegetable seed is covered with a dried material of a gel-form paper liquid which can be prepared from the paper pulp, they are light and excellent in the resilience.

Furthermore, since common paper such as used newspaper, used magazines and the like are biodegradable, they can be reused as a paper material for preparing the planting seed unit of the present invention, without causing any environmental problem by sowing the planting seed unit. Therefore, the present invention is also advantageous from the viewpoint of resource recycling.

Finally, it must be understood that the invention is in no way limited to the above embodiments and that many modifications may be made on the aobve embodiments without departing from the scop of the invention as defined by the appended claims.

## Claims

1. A planting seed unit comprising a vegetable seed and a mass of paper which is unified with the vegetable seed to cover the vegetable seed.

2. The planting seed unit of claim 1, further comprising a vegetable cell or bacteria which is contained in the mass of paper, wherein the bacteria include mushroom.

3. The planting seed unit of claim 1, further comprising clay in the mass of paper.

4. The planting seed unit of claim 1, wherein the paper includes biodegradable paper.

5. The planting seed unit of claim 1, wherein the paper includes wood pulp.

6. The planting seed unit of claim 1, having a shape which is selected from the group consisting of spherical form, pellet form, tablet form and mat form.

7. A planting seed unit comprising:
a mass of clay which contains a vegetable seed; and
a coating layer comprising paper and covering the mass of clay.

8. A process for preparing a planting seed unit, comprising the steps of:
finely crushing paper in the presence of water to obtain an aqueous liquid paper;
mixing a vegetable seed with the aqueous liquid paper to obtain a mixture;
molding the mixture in a predetermined shape; and
drying the molded mixture to obtain the planting seed unit.

9. The preparation process of claim 9, further comprising:
breaking or cutting the paper, before the crushing step, into small pieces; and
dehydrating the mixture, before the molding step, so as to make easy molding of the mixture,
wherein, at the mixing step, 5 to 10 parts by volume of the aqueous liquid paper is mixed with one part by volume of the vegetable seed.

10. A process for preparing a planting seed unit, comprising the steps of:
making a mass of clay which contains a vegetable seed; finely crushing paper in the presence of water to obtain an aqueous liquid paper;
coating the mass of clay with the aqueous liquid paper; and
drying the aqueous liquid paper coated on the mass of clay to obtain the planting seed unit.
